(19) Europäisches Patentamt
European Patent Office
Office européen des brevets

(11) **EP 2 450 693 A1**

(12) **EUROPEAN PATENT APPLICATION**

(43) Date of publication:
**09.05.2012 Bulletin 2012/19**

(51) Int Cl.:
*G01N 21/41* (2006.01)       *G01N 21/77* (2006.01)
*G01J 3/18* (2006.01)        *G02B 6/12* (2006.01)

(21) Application number: **10190352.4**

(22) Date of filing: **08.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Nederlandse Organisatie voor
Toegepast
-Natuurwetenschappelijk Onderzoek TNO
2628 VK Delft (NL)**

(72) Inventors:
• **Lagioia, Michele
  2628 VK Delft (NL)**

• **Yousefi, Mirvais
  2628 VK Delft (NL)**
• **Harmsma, Peter Johan
  2628 VK Delft (NL)**
• **Lo Cascio, Dario Maria Rosario
  2628 VK Delft (NL)**

(74) Representative: **Jansen, Cornelis Marinus
VEREENIGDE
Johan de Wittlaan 7
2517 JR Den Haag (NL)**

(54) **An arrayed waveguide grating (AWG)**

(57)     The invention relates to an arrayed waveguide grating (10) for detecting a change in an effective refractive index in a detection zone, comprising the detection zone comprising optical slot array waveguides (14a,14b) integrated on a semiconductor chip. The invention further relates to a method of manufacturing an arrayed waveguide grating (10) comprising the steps of providing a first region of optical slot waveguides on a semiconductor chip; providing a second interaction region of optical slot waveguides separated from the first waveguide and placed under a sensing window (13) on the semiconductor chip.

Fig.1

EP 2 450 693 A1

**Description**

FIELD OF THE INVENTION

The invention relates to an arrayed waveguide grating arranged for detecting a change in an effective refractive index in a detection zone, and a method to detect variations of biochemical substances using the arrayed waveguide grating.

The invention further relates to a method of manufacturing an arrayed waveguide grating.

BACKGROUND OF THE INVENTION

An embodiment of the arrayed waveguide grating as is set forth in the opening paragraph is known from WO2005043139. The known is based on semi-integrated optics, as only the grating is realized as a waveguide structure, while the incident and reflected light travels in free space. The known arrangement has the following disadvantages - it has a diminished versatility of the use of the device, as well as reduced sensitivity.

SUMMARY OF THE INVENTION

It is an object of the invention to provide an arrayed waveguide grating with improved operational characteristics.

To this end the arrayed waveguide grating for detecting a change in an effective refractive index in a detection zone, according to the invention, comprises the detection zone comprising optical slot array waveguides integrated on a semiconductor chip.

The invention is based on the following insights. First, it is found advantageous to combine both a detection step and a measurement step, such as spectrometry using a single device. Lab-on-chip applications need integration of sensing, spectrometry and, preferably, also read-out functionalities together.

In optical waveguide based lab-on-chips, known in the art, ring resonators are used for sensing, while the spectrometry is carried out separately (either out-of-chip, or on-chip using an integrated diffractive element like the AWG).

The advantages of the present invention are as follows. First, miniaturization may be reached, whereby incorporating the functionality of basic components, such as sensor, spectrometer and, optionally, the read-out for AD-conversion in a single device, allows decreasing overall the device size. Secondly, suitable tuning between spectrometer and sensor is simpler because it relates only to one device and not to the cascade of two devices (as in the prior art). This implies that the sensor and the spectrometer may be designed and fabricated in the same process.

It is found that integrating sensing and spectrometry functionalities together while not loosing sensing accuracy is achievable due to the use of the slot waveguide structure as key element of the array waveguide grating. This enables to enhance the sensitivity to physical variations within the environment of the light propagating in the waveguide.

Silicon-on-Insulator (SOI) technology allows miniaturizing the whole device relevantly and makes creation of integrated spectrometers for lab-on-chip applications attainable.

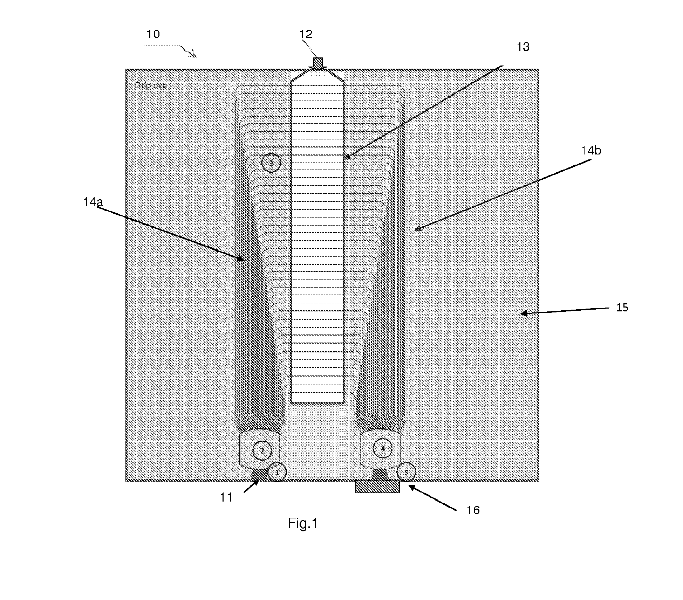

In an embodiment of the arrayed waveguide grating according to the invention, an optical field is confined in a high refractive index core. However, it will be appreciated in terms of detection sensitivity that the optical field may be confined to an area where the substance to be detected is present, which implies that the waveguide core has to be properly designed. More details on this embodiment will be discussed with reference to Figure 1.

In a still further embodiment of the arrayed waveguide grating according to the invention, the array waveguides comprise a respective slot gap, wherein the slot gap of the first slot waveguide is different from the slot gap of the second slot waveguide. Preferably, the gap is manufactures using lithography. Preferably, the slot gaps of the first slot waveguide and of the second slot waveguide are provided with suitable respective materials of the waveguide for enabling that the confinement factor in the slot is at least 5%. Waveguide in silicon oxide may be a suitable example. The corresponding slot dimension may be in the range of 100 — 150 nm. If the material is polymer based, the slot may be larger, for example 200 nm.

In a still further embodiment of the arrayed waveguide grating according to the invention a first free propagation space is provided in an area preceding the detection zone, wherein the first free propagation zone comprises a material capable of changing its refractive index in response to presence of a chemical element.

In a similar way, a second free propagation space may be provided in an area following the detection zone, wherein the second free propagation zone comprises a material capable of changing its refractive index in response to presence of a chemical element. Such material may be provided in a waveguide, for example.

In a still further embodiment of the arrayed waveguide grating according to the invention the second free propagation space is adapted for focusing light emerging from the detection zone on an image plane. This had advantage for further processing of the wavelength shift occurred in the grating. More preferably, the second free propagation space is arranged to operate in focus. However, it the second free propagation space may alternatively be arranged to operate out of focus.

In a still further embodiment of the arrayed waveguide grating according to the invention it further comprises an output array for optically coupling the second free propagation space to an array of detectors.

The method of manufacturing an arrayed waveguide grating according to the invention comprises the steps of:

- providing a first region including optical slot waveguides on a semiconductor chip;
- providing a second region including optical slot waveguides under a sensing window and distinct from the first detection zone;
- providing a groove area on top of the array waveguides, as a sensing window.

It will be appreciated that the groove area is used to accommodate an analyte to be examined. These and other aspects of the invention will be further discussed with reference to figures, wherein like reference numerals designate like elements.

BRIEF DESCRIPTION OF THE DRAWINGS

Figure 1 presents a schematic top view of the arrayed waveguide grating according to the invention.
Figure 2 presents in a schematic way a coupling region between the first slot waveguide and the second slot waveguide in the grating according to the invention.
Figure 3 depicts schematically a coupling plane between the waveguide in the first region and the waveguide in the second region.

DETAILED DESCRIPTION OF THE DRAWINGS

Figure 1 presents a schematic top view of the arrayed waveguide grating according to the invention. As an exemplary embodiment a single wavelength, single mode waveguide will be discussed.

The arrayed waveguide grating 10 according to the invention is provided on a chip dye, which may or may not be preferably coated with a material 15 arranged to alter its refractive index. The input waveguides 11 may be arranged to conduct suitable light from a light source, for example from a laser. The fluid sample 12 may be provided in a sensing window 13 grooved on top of the array waveguides 14a, 14b in such a way that the fluid in the window is in contact with the core of the waveguides (in one arrangement) or fills the gaps of the slot waveguides (in another arrangement). The light, shifted in dependence of the analyte or other substance conceived to be detected by the device 20 is captured by the array of detectors 16.

As follows from Figure 1 five functional regions may be differentiated.

Region 1 relates to a single wavelength, single mode waveguide, as may be per se known in the art.

Region 2 represents schematically a first Free Propagation Region (FPR), where the light from the input waveguide is diffracted. This area can be used as sensing region according to two different principles.

First, a superficial sensing may be used. A particular layer of a receptor may be deposited on the FPR region (polymers attached to it to detect gases or fluids), which increases its refractive index when a substance is detected. Secondly, homogeneous sensing may be used. In this case no receptor may be used. Instead, the waveguide may be covered by a suitable substance whose refractive index changes depending on composition properties (the effective index of the FPR changes accordingly).

Region 3 refers to the array arms, which are slot waveguides (each constituted by two wires separated by an empty gap. According to this technical feature strong optical field confinement in the gap is enabled. The solution to be evaluated may covers the whole region of the gap. The effective index of the slot wave guide may be strongly sensitive (TE mode more than TM mode) to the refractive index variation of the solution which covers the array and fills the gaps of the slot waveguides. The refractive index variation depends on the concentration of one or more analytes in the solution.

Region 4 relates to a second Free Propagation Region (FPR) which is preferably arranged to focus the light from the array onto the image plane. So, the lateral position of the focal point depends on the effective index variation in the array, which in turn depends on the concentration and/or presence of a substance in region 2 and/or concentration variation of one or more analytes contained in the solution that covers the array. The length of region 4 can be designed to work according to two different principles:

In-focus: The focal point is directly projected onto the image plane;
Out of focus: Increasing the length of the region, the projected light onto the image plane is not a point but a beam whose waist intercepting the image plane depends on the length of the region.

Using region 4 as a sensing area, with the same criteria valid for region 2, the in- and out-of-focus behavior can be tuned by the effective index variation caused by the sensitivity to the substance to be detected.

Region 5 relates to a suitable waveguide in the output array can be either connected to a photodiode for optoelectronic conversion or used to activate light emitting devices for displaying purposes (optical domain). Depending on the working principle of the region 4, two functionalities are possible:

> Digital output: Depending on the shift of the beam and design of the width and the number of output waveguides, a particular waveguide (active) is coupled with light. The order of the active waveguide within the output array gives the discrete sensing information.
>
> Analog output: More than one output waveguide is coupled with light. The proportion between the intensities of light coupled on different waveguides gives the sensing information.

The arrayed waveguide grating according to the invention has the following advantages. First, the sensing is already done on the arrayed waveguide grating, which does not necessitate use of a separate sensing device, such as a ring resonator. Secondly, superficial and homogeneous sensing can be used for other integrated diffraction gratings where free propagation is used: e.g. the echelle grating. Thirdly, in the device according to the invention sensing, spectrometry and, optionally, analog-to-digital conversion are integrated on one single device, that is a semiconductor chip. This leads to easier fabrication, smaller area, possibility of a suitable digital output and no fiber coupling, as the output may be electrical. In addition, two different substances can be measured, for example, one being provided with the FPR and the other being provided with the array.

Since TE and TM have different sensitivities, they will focus on different spots of the output plane (second FPR). This can be used to enhance the device functionality, for example by integrating different sensing principles with different TE/TM sensitivities. In addition, the AD conversion resolution can be tuned by adjusting design parameters of the arrayed waveguide grating.

The sensor is sensitive to environmental variations in the regions 2,4 and 3 in Fig.1 (FPRs and array waveguides). However, the use of slot waveguides in the array waveguides region of the device according to the invention region may be an effective solution for increasing the sensitivity of the device to external variations.

For example, an external variation of the refractive index $(\Delta n_{cov})$ of a covering chemical solution flowing into the groove (region 12 in Fig.1) on top of the array may be considered and optimized.

The working principle of the device is such that $\Delta n_{cov}$ induces a shift of the focal point of the light on the second FPR. If the second FPR is designed to work in-focus, this shift will be digital because only one output waveguide will be coupled with light and the order of the illuminated output waveguide will give the information about the external variation; on the other hand, if the second FPR is designed to work out-of-focus, the light will be coupled to different output waveguides and ratio between light intensities from different output waveguides will give the information about the external variation.

The sensitivity of the device can be expressed as $S = \dfrac{\Delta s}{\Delta n_{cov}} = \dfrac{\Delta s}{\Delta \lambda_0} \dfrac{\Delta \lambda_0}{\Delta n_{eff}^{int}} \dfrac{\Delta n_{eff}^{int}}{\Delta n_{cov}}$,

where $n_{eff}^{int}$ is the effective refractive index of the interaction region, where slot waveguides are present, $\Delta \lambda_0$ is the wavelength shift of the output light due to the interference in the second FPR and $\Delta s$ is the shift of the centre of the focal spot on the output plane of the FPR.

The three factors of the product can be summarized as following. The sensitivity ratio $\dfrac{\Delta n_{eff}^{int}}{\Delta n_{cov}} = S_{slot}$ can be calculated using the method set forth in Dell'Olio et al "Optical sensing by optimized silicon slot waveguides", Optics Express, vol. 15 , n.8, 2007.

Accordingly, it is found that by properly dimensioning just the slot waveguide, the sensitivity can reach values around the unity, which establishes the advantage of the slot waveguide with respect to any other conventional waveguides.

This advantage can be exploited in an AWG according to the invention, which is an integrated spectrometer device which decomposes an input light beam into its spectral components (spectrometer). In fact, the device according to the invention enables exploiting the enhanced sensing properties of the slot waveguide and the spectral characteristics of the AWG. This offers the possibility to have a smaller device and to integrate photo-detectors directly on-chip in correspondence of the output waveguides, which may be a slot waveguide.

Differently from a normal spectrometer, in the device according to the invention the wavelength change is due to the variation of the effective index of the waveguides in the interaction region (in this case, slot waveguides). Therefore, the second factor of S can be calculated from the equation $m\lambda_0 = n_{eff}^{arr} \Delta L^{arr} + n_{eff}^{int} \Delta L^{int}$,

where m is the diffractive order of the AWG, $n_{eff}^{arr}$ is the effective index of the non-interactive region of the array (the one which is not in contact with the sensed solution), and $\Delta L^{arr}$ is the mutual physical path length difference between the array waveguides in the same region, which can be used to design the spectrometer according to the conventional equations known per se in the art. Therefore, deriving the previous equation, the sensitivity ratio $\dfrac{\Delta \lambda_0}{\Delta n_{eff}^{int}} = \dfrac{\Delta L^{int}}{m}$ can be calculated.

Finally the relative sensitivity ratio can be calculated as $\dfrac{\Delta s}{\Delta \lambda_0} = -\dfrac{L_f}{d_w n_{eff}^{slab} \lambda_0^2}(\Delta L^{arr} n_g^{arr} + \Delta L^{int} n_g^{int})$,

where

ng indicates the group index of the respective waveguide, $n_{eff}^{slab}$ is the effective index of the slab region (FPR), $d_w$ is the distance between the centres of adjacent array waveguides, $L_f$ is the length of the FPR and $\lambda_0$ is the central wavelength. Combining the three sensitivity ratios:

$$S = \frac{\Delta s}{\Delta n_{cov}} = -S_{slot}\frac{\Delta L_{int}L_f}{md_o n_{eff}^{slab}\lambda_0^2}(\Delta L^{arr} n_g^{arr} + \Delta L^{int} n_g^{int}).$$

This equation can be used to optimize the device according to the invention in order to maximize the sensitivity to variations of optical refractive index of the covering chemical substance. Since $n_{eff}^{slab}$, $d_w$ and $L_f$ are used to design the spectrometric characteristics of the AWG and to achieve the in-focus/out-of-focus behaviour, $S_{slot}$ and $\Delta L_{int}$ can be used to enhance the whole sensitivity. It should be taken into account that $S_{slot}$ depends on the confinement factor of the optical power in the gap of the slot, which in turns depends on the particular material which is employed and the wavelength of the light travelling into the waveguide. For a Silicon-On-Insulator platform, at $\lambda_0 = 1.55\mu m$, confinement factors higher than 50% can be achieved with a gap of 100nm. A larger gap of 400nm (less sensitive to fabrication tolerances) can be achieved for the same platform if $\lambda_0 > 3\mu m$.

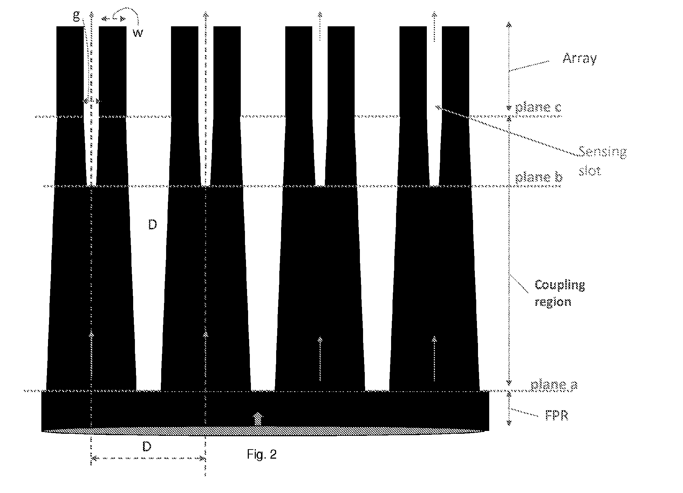

Figure 2 presents in a schematic way a coupling region between the first slot waveguide and the second slot waveguide in the grating according to the invention. The coupling section may comprise two parts:

- *Rib waveguide* section (from plane *a* to *b*) where the mode travels in the high refractive index material (solid painted region)
- *Slot waveguide* section (from plane b to c): where the light travels in the empty gap between two wires.

The array arms region may start with plane c and the light confinement in each waveguide depends on the parameter g and w. At the starting section of the slot waveguide, the gap distance is preferably set to a minimum achievable by lithographic resolution. The *"a"* plane can be either flat or curved. If the *"a"* plane is flat, the phase shift between array arms need to be compensated (either designing g, w or arm length) in order to have constructive interference on the second FPR. It will be appreciated that such compensation measures are known per se and lie within the ordinary skill of the person skilled in the art.

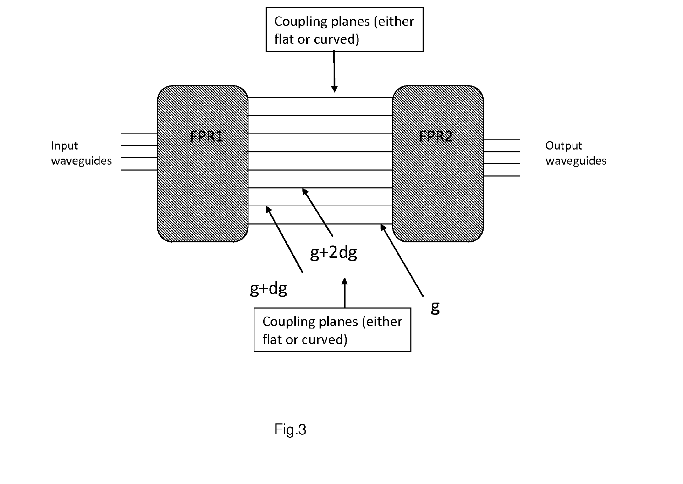

Figure 3 depicts schematically a coupling plane between the first waveguide and the second waveguide. In order to enable the common working principle of the arrayed waveguide grating, every wave traveling in a specific arm is preferably phase-shifted of $2\pi$ with respect to the others. Normally, a difference of geometrical path length is used to achieve the shift. The phase shift is introduced by using bends in the array, see Figure 1.

However, it is possible to increase the phase shift by changing the effective indices of the neighboring waveguides by tuning the parameter *g* of the slot waveguides. A variation *dg* of the g parameter is translated into a linear change of the effective index of the waveguide and to a relative phase shift. Then the two neighboring waveguides can be designed to have a difference *dg* on g which is translated into a phase difference of 2n between them. In this way, the bends in the array arms can be reduced or even avoided, which may be advantageous for simplifying manufacturing of the arrayed waveguide grating according to the invention.

In addition, by avoiding or reducing bends bend losses occurring in the devices known in the art may be substantially reduced or avoided. More spatial separation between the array and the FPRs can be achieved in the device according to the invention, which is advantageous at such region may be potentially useful for sensing. The device according to the invention is particularly suitable for lab-on-chip applications, because a micro-fluidic channel can be directly coupled, using a groove, onto the waveguides array and FPRs.

The device according to the invention can be used as a smart biochemical sensor capable of working with integrated low-power inexpensive lasers with the possibility to have digital or analog and optical or electronic output depending on the design of the device. The sensing principle allows the real-time availability of information. The device according to the invention may be used in the monitoring of waste gases and leakages, the monitoring of fermentation processes as well as in Micro-Fluidic Sensor networks for pollution tracking and detection.

It will be appreciated that although specific embodiments of the electronic component according to the invention are discussed separately for clarity purposes, interchangeability of compatible features discussed with reference to isolated figures is envisaged. While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

**Claims**

1. An arrayed waveguide grating for detecting a change in an effective refractive index in a detection zone, comprising:

    - the detection zone comprising optical slot array waveguides integrated on a semiconductor chip.

2. The arrayed waveguide grating according to claim 1, wherein an optical field is confined in a high refractive index core.

3. The arrayed waveguide grating according to claim 1, wherein an optical field is confined in a surrounding material comprising a low refracting index.

4. The arrayed waveguide grating according to claim 2, wherein the waveguide structure is arranged to enable the optical confinement factor of at least 5% in the slot waveguide gap.

5. The arrayed waveguide grating according to any one of the preceding claims, wherein the array waveguides comprise a respective slot gap, wherein the slot gap of the first slot waveguide is different from the slot gap of the second slot waveguide.

6. The arrayed waveguide grating according to any one of the preceding claims, wherein a first free propagation space is provided in an area preceding the detection zone, wherein the first free propagation zone comprises a material capable of changing its refractive index in response to presence of a chemical element.

7. The arrayed waveguide grating according to any claim 5, wherein a second free propagation space is provided in an area following the detection zone, wherein the second free propagation zone comprises a material capable of changing its refractive index in response to presence of a chemical element.

8. The grating according to claim 1, wherein the array waveguides are slot array waveguides, the slot gap of the first slot waveguide and of the second slot waveguide is less than 200 nm.

9. The grating according to claim 6 or 7, wherein the material is provided as a layer within the first free propagation space.

10. The grating according to claim 6 or 7, wherein the material is provided in a waveguide.

11. The grating according to claim 7, wherein said second free propagation space being adapted for focusing light emerging from the detection zone on an image plane.

12. The grating according to claim 7, wherein the second free propagation space is arranged to operate in focus.

**13.** The grating according to claim 7, wherein the second free propagation space is arranged to operate out of focus.

**14.** The grating according to any one of the preceding claims 7 — 13, further comprising an output array for optically coupling the second free propagation space to a detector.

**15.** A method of manufacturing an arrayed waveguide grating comprising the steps of:

- providing a first region including optical slot waveguides on a semiconductor chip;
- providing a second region including optical slot waveguides under a sensing window and distinct from the first detection zone;
- providing a groove area on top of the array waveguides, as a sensing window.

**16.** The method according to claim 15, comprising the step of tuning the gap between the slot waveguides for changing the effective indices of the neighboring waveguides.

**17.** The method according to claim 16, wherein said tuning is carried out by tuning the parameter g of the slot waveguides, so that the two neighboring waveguides have a difference *dg* on g which is translated into a phase difference of 2n between them.

Fig.1

Fig. 2

Fig.3

Europäisches
Patentamt

European
Patent Office

Office européen
des brevets

# EUROPEAN SEARCH REPORT

**Application Number**

EP 10 19 0352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 710 564 A2 (LUCENT TECHNOLOGIES INC [US]) 11 October 2006 (2006-10-11) * paragraphs [0009] - [0011]; figures 2A, 2B, 3 * | 1 | INV.<br>G01N21/41<br>G01N21/77<br>G01J3/18<br>G02B6/12 |
| X<br>Y | JP 2000 028526 A (NIPPON TELEGRAPH & TELEPHONE) 28 January 2000 (2000-01-28) * abstract; figures 1,2 * | 1<br><br>1-17 | |
| Y | RAVI J MCCOSKER ET AL: "Optical chemical sensor using a multi-channel directional coupler with slot waveguides", PHOTONICS (ICP), 2010 INTERNATIONAL CONFERENCE ON, IEEE, PISCATAWAY, NJ, USA, 5 July 2010 (2010-07-05), pages 1-5, XP031777415, ISBN: 978-1-4244-7186-7 * the whole document * | 1-17 | |
| Y | US 7 609 932 B1 (SPILLANE SEAN [US]) 27 October 2009 (2009-10-27) * column 5, line 14 - column 6, line 41; figures 7,10 * * column 1, lines 5-16 * | 1-17 | TECHNICAL FIELDS SEARCHED (IPC)<br><br>G01N<br>G01J<br>G02B |
| X<br><br><br><br><br><br><br><br>Y | KODATE K ET AL: "Compact Spectroscopic Sensor Using an Arrayed Waveguide Grating", OPTICAL MEMS AND NANOPHOTONICS, 2007 IEEE/LEOS INTERNATIONAL CONFERENC E ON, IEEE, PI, 1 August 2007 (2007-08-01), pages 159-160, XP031155617, ISBN: 978-1-4244-0641-8 * the whole document * | 1<br><br><br><br><br><br><br><br>1-17 | |

The present search report has been drawn up for all claims

| Place of search | Date of completion of the search | Examiner |
|---|---|---|
| Munich | 18 January 2011 | Duijs, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**

EP 10 19 0352

18-01-2011

| Patent document cited in search report | | | Publication date | Patent family member(s) | | Publication date |
|---|---|---|---|---|---|---|
| EP 1710564 | A2 | | 11-10-2006 | NONE | | |
| JP 2000028526 | A | | 28-01-2000 | JP | 3454417 B2 | 06-10-2003 |
| US 7609932 | B1 | | 27-10-2009 | NONE | | |

EP 2 450 693 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005043139 A

### Non-patent literature cited in the description

- **DELL'OLIO et al.** Optical sensing by optimized silicon slot waveguides. *Optics Express,* 2007, vol. 15 (8